(19) Europäisches Patentamt
European Patent Office
Office européen des brevets

(11) **EP 1 759 191 B1**

(12) **EUROPÄISCHE PATENTSCHRIFT**

(45) Veröffentlichungstag und Bekanntmachung des Hinweises auf die Patenterteilung:
**01.08.2012 Patentblatt 2012/31**

(21) Anmeldenummer: **05750032.4**

(22) Anmeldetag: **06.06.2005**

(51) Int Cl.:
***G01N 27/24*** *(2006.01)*

(86) Internationale Anmeldenummer:
**PCT/EP2005/052582**

(87) Internationale Veröffentlichungsnummer:
**WO 2006/000520 (05.01.2006 Gazette 2006/01)**

(54) **ANORDNUNG EINES BAUTEILS UND EINER KONTROLLVORRICHTUNG DES BAUTEILS, VERFAHREN ZUM HERSTELLEN DER ANORDNUNG UND VERWENDUNG DER ANORDNUNG**

CONFIGURATION OF A COMPONENT AND A TEST DEVICE OF THE COMPONENT, METHOD FOR PRODUCING SAID CONFIGURATION AND USE OF THE SAME

CONFIGURATION D'UN ELEMENT ET D'UN DISPOSITIF DE CONTROLE DE CET ELEMENT, PROCEDE POUR REALISER CETTE CONFIGURATION ET UTILISATION DE CETTE CONFIGURATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.06.2004 DE 102004030295**

(43) Veröffentlichungstag der Anmeldung:
**07.03.2007 Patentblatt 2007/10**

(73) Patentinhaber: **SIEMENS AKTIENGESELLSCHAFT 80333 München (DE)**

(72) Erfinder: **VAN DER LAAG, Niels 81369 München (DE)**

(56) Entgegenhaltungen:
**DE-A1- 10 223 985      DE-A1- 19 810 674
DE-A1- 19 923 143      US-A- 4 655 077
US-A1- 2003 122 682**

• **HOPF M: "UEBERWACHUNG DES FUTTERVERSCHLEISSES VON TIEGEL- UND RINNENOEFEN" GIESSEREI, GIESSEREI VERLAG, DUSSELDORF, DE, Bd. 89, Nr. 1, 15. Januar 2002 (2002-01-15), Seiten 36-42, XP001143282 ISSN: 0016-9765**

**Beschreibung**

Die Erfindung betrifft eine Anordnung eines Bauteils und mindestens einer Kontrollvorrichtung zum Erfassen einer Degradation des Bauteils, wobei die Kontrollvorrichtung mindestens einen elektrischen Schwingkreis aufweist und das Bauteil und der Schwingkreis derart miteinander verbunden sind, dass die Degradation des Bauteils eine Degradation des Schwingkreises und damit eine Änderung eines detektierbaren Resonanzsignals des Schwingkreises bewirkt. Daneben werden ein Verfahren zum Herstellen der Anordnung und ein Verfahren zum Überprüfen einer Funktionsfähigkeit des Bauteils unter Verwendung der Anordnung angegeben.

Eine Anordnung der genannten Art ist beispielsweise aus der DE 102 23 985 A1 bekannt. Das Bauteil ist ein keramisches Hitzeschild, das in einer Brennkammer einer Gasturbine eingesetzt wird. Die Brennkammer der Gasturbine weist einen Innenraum und ein den Innenraum umgebendes Gehäuse auf. Im Innenraum der Brennkammer wird ein fossiler Brennstoff verbrannt. Bei der Verbrennung wird eine Temperatur von bis zu 1500° C erreicht. Dabei können korrosive Gase entstehen, die das Gehäuse der Brennkammer angreifen. Zum Schutz des Gehäuses vor den hohen Temperaturen und vor dem Angriff korrosiver Gase ist die Brennkammer mit einer Vielzahl keramischer Hitzeschilde ausgekleidet.

Ein Hitzeschild ist ein Bauteil aus einem Bauteilmaterial, das eine sehr gute Temperatur- und Korrosionsbeständigkeit aufweist. Das Bauteilmaterial ist ein keramisches Material, beispielsweise Mullit. Aufgrund einer porösen Struktur mit einer Vielzahl von Mikrorissen zeigt Mullit ein sehr gutes Thermoschockverhalten. Eine sehr starke Temperaturschwankung, die beispielsweise beim Unterbrechen des Verbrennungsprozesses in der Brennkammer der Gasturbine auftritt, wird ausgeglichen, ohne dass das Hitzeschild zerstört wird. Allerdings kann es bei einer mechanischen Überlastung des Hitzeschildes zu einer Degradation des Hitzeschildes kommen. Es kann sich ein Riss (Makroriss) im Hitzeschild bilden. Ein derartiger Riss bildet sich dabei insbesondere an einem Rand des Hitzeschildes. Im Betrieb kann es zu einer Ausbreitung des Risses in Richtung Mitte des Hitzeschildes kommen. Der Riss wirkt sich bis zu einer bestimmten Länge nicht nachteilig auf die Funktionsfähigkeit des Hitzeschildes aus und kann deshalb toleriert werden. Überschreitet der Riss aber eine bestimmte Länge, so ist die Funktionsfähigkeit des Hitzeschildes nicht mehr gesichert. Ein Austausch des Hitzeschildes ist erforderlich, um einen durch den Riss verursachten Bruch des Hitzeschildes während des Betriebs der Gasturbine zu vermeiden. Es ist also unbedingt notwendig, einen vorhandenen Riss zu erkennen und die Länge des Risses zu bestimmen.

Um einen Riss zu detektieren, der über die zulässige Länge hinaus in Richtung der Mitte des Hitzeschildes fortgeschritten ist, verfügt die Kontrollvorrichtung der bekannten Anordnung über eine Leiterstruktur, die als Schwingkreis ausgestaltet ist. Der Schwingkreis fungiert als Empfänger und Sender eines elektromagnetischen Hochfrequenzsignals. Wenn der Schwingkreis funktionsfähig ist, kann ein Hochfrequenzsignal mit der Resonanzfrequenz des Schwingkreises eingekoppelt und ausgekoppelt werden. Ist dagegen der Schwingkreis defekt, kann kein Hochfrequenzsignal mit der Resonanzfrequenz des Schwingkreises ein- und ausgekoppelt werden.

Der Schwingkreis und das Hitzeschild sind derart aneinander angeordnet, dass die Ausbreitung eines vorhandenen Risses vom Rand in Richtung der Mitte des Hitzeschildes zu einer Degradation des Schwingkreises führt. Infolge davon wird kein Resonanzsignal erhalten. Das Fehlen des Resonanzsignals wird als Unterbrechung des Schwingkreises interpretiert. Das Hitzeschild wird ausgewechselt.

Das Fehlen des Resonanzsignals des Schwingkreises kann aber auch andere Ursachen als die Degradation des Schwingkreises haben. So ist es möglich, dass eine zum Erfassen des Resonanzsignals verwendete Antenne der Kontrollvorrichtung defekt ist. Ebenso kann die Antenne und der Schwingkreis ungünstig zueinander angeordnet sein, so dass nur ein schwaches oder gar kein Signal detektiert werden.

Aufgabe der vorliegenden Erfindung ist es daher, eine Möglichkeit anzugeben, mit der eine im Vergleich zum Stand der Technik zuverlässigere Aussage über die Funktionsfähigkeit eines Bauteils getroffen werden kann.

Zur Lösung der Aufgabe wird eine Anordnung eines Bauteils und mindestens einer Kontrollvorrichtung (3) zum Erfassen einer Degradation des Bauteils angegeben, wobei

- die Kontrollvorrichtung mindestens einen elektrischen Schwingkreis aufweist und
- der Schwingkreis von einer auf einem Oberflächenabschnitt des Bauteils angeordneten und/oder in einem Volumen des Bauteils integrierten elektrischen Leiterstruktur gebildet ist, so dass die Degradation des Bauteils eine Degradation des Schwingkreises und damit eine Änderung eines detektierbaren Resonanzsignals des Schwingkreises bewirkt, dadurch gekennzeichnet, dass
- die Kontrollvorrichtung mindestens einen weiteren Schwingkreis mit einem weiteren detektierbaren Resonanzsignal aufweist und
- der Schwingkreis und der weitere Schwingkreis elektrisch zu einem Gesamtschwingkreis mit einem detektierbaren, vom Resonanzsignal und vom weiteren Resonanzsignal verschiedenen Gesamtresonanzsignal gekoppelt sind
- wobei die Kontrollvorrichtung mindestens eine Einrichtung zum Einspeisen eines Anregungssignals in den Schwingkreis und/oder in den weiteren Schwingkreis und/oder in den Gesamtschwingkreis aufweist und

- wobei die Kontrollvorrichtung mindestens einen Detektor zum Erfassen des Resonanzsignals und/oder des weiteren Resonanzsignals und/oder des Gesamtresonanzsignals aufweist, wobei der Schwingkreis und der weitere Schwingkreis durch eine parallele Verschaltung zum Gesamtschwingkreis gekoppelt sind.

Zur Lösung der Aufgabe wird auch ein Verfahren zum Herstellen der Anordnung mit folgenden Verfahrensschritten angegeben: a) Aneinander Anordnen des Bauteils und eines Leitermaterials und/oder einer Vorstufe des Leitermaterials und b) festes Verbinden des Bauteils und des Leitermaterials und/oder der Vorstufe des Leitermaterials derart, dass eine den Gesamtschwingkreis bildende Leiterstruktur auf dem Bauteil entsteht.

Darüber hinaus wird zur Lösung der Aufgabe ein Verfahren zum Überprüfen einer Funktionsfähigkeit des Bauteils unter Verwendung der Anordnung mit folgenden Verfahrensschritten angegeben: a') Erfassen eines Messsignals der Kontrollvorrichtung und b') Zuordnen des Messsignals zum Resonanzsignal des Schwingkreises und/oder zum weiteren Resonanzsignal des weiteren Schwingkreises und/oder zum Gesamtresonanzsignals des Gesamtschwingkreises, wobei aufgrund der Zuordnung auf die Funktionsfähigkeit des Bauteils geschlossen wird.

Der Schwingkreis, der weitere Schwingkreis und der Gesamtschwingkreis werden von beliebigen Leiterstrukturen aus Widerständen, Kapazitäten und Induktivitäten gebildet. Größe, Form und Leitermaterial der Leiterstruktur und die feste Verbindung der Leiterstruktur und des Bauteils miteinander sind derart gewählt, dass sich die Degradation des Bauteils in einer Degradation der Leiterstruktur und damit in einer Degradation des Schwingkreises fortsetzt. Die Degradation des Schwingkreises der Leiterstruktur führt zu einer Änderung des detektierbaren Messsignals der Leiterstruktur. Diese Änderung wird durch den Vergleich des Ist-Werts und des (erwarteten) Soll-Werts des Messsignals der Leiterstruktur erfasst. Aufgrund des Vergleichs wird auf die Funktionsfähigkeit des Bauteils geschlossen. Im Gegensatz zum Stand der Technik ist bei der vorliegenden Erfindung dafür gesorgt, dass in jedem Fall ein Messsignal erhalten wird, sobald die Kontrollvorrichtung funktionsfähig ist. Sollte kein Messsignal zu erfassen sein, so ist dies unzweideutig ein Hinweis darauf, dass die Kontrollvorrichtung defekt ist. Beispielsweise ist die Antenne der Kontrollvorrichtung defekt. Denkbar ist auch, dass der aus den Schwingkreisen gebildete Gesamtschwingkreis zerstört ist.

Wesentlich an der Erfindung ist die Kopplung des Schwingkreises und des weiteren Schwingkreises zum Gesamtschwingkreis. In einer besonderen Ausgestaltung sind der Schwingkreis und der weitere Schwingkreis durch eine parallele Verschaltung zum Gesamtschwingkreis gekoppelt. Die parallele Verschaltung gelingt beispielsweise durch eine parallele Verschaltung von Kapazitäten der beiden Schwingkreise.

In einer weiteren Ausgestaltung weist die Kontrollvorrichtung mindestens eine Einrichtung zum Einspeisen eines Anregungssignals in den Schwingkreis und/oder in den weiteren Schwingkreis und/oder in den Gesamtschwingkreis auf. Darüber hinaus weist die Kontrollvorrichtung mindestens einen Detektor zum Erfassen des Resonanzsignals und/oder des weiteren Resonanzsignals und/oder des Gesamtresonanzsignals auf. Vorzugsweise weisen der Detektor zum Erfassen eines des Resonanzsignale und/oder die Einrichtung zum Einspeisen eines der Anregungssignale mindestens eine Antenne auf. Damit ist es möglich, elektrische Energie in Form von elektromagnetischen Wellen drahtlos in die Schwingkreise einzukoppeln und auszukoppeln.

Das Erfassen der Degradation des Bauteils erfolgt durch eine Resonanzmessung. Der Schwingkreis, der weitere Schwingkreis und der Gesamtschwingkreis wirken jeweils als Resonator für ein Hochfrequenzsignal. Mit Hilfe der Antenne der Kontrollvorrichtung kann das Hochfrequenzsignal in den bzw. in die Schwingkreise eingekoppelt werden. Das Hochfrequenzsignal wird von dem oder den Schwingkreisen wieder abgestrahlt und kann von derselben oder einer anderen Antenne erfasst werden. Eine Beschädigung eines der Schwingkreise führt zu einem veränderten Resonanzverhalten bezüglich einer Frequenz und/oder Amplitude und/oder Phase des Hochfrequenzsignals.

Durch die Resonanzmessung erfolgt das Erfassen der Degradation des Bauteils berührungslos. Dadurch ist insbesondere eine Degradation eines nicht zugänglichen oder schwer zugänglichen Oberflächenabschnitts eines Bauteils erfassbar. Beispielsweise ist auf der Rückseite des Hitzeschildes einer Brennkammer, die im eingebauten Zustand nicht zugänglich ist, der Gesamtschwingkreis angebracht. In einer Standphase der Gasturbine erfolgt das Erfassen eines Risses durch einfaches Aufsetzen der Antenne auf das Hitzeschild im Innenraum der Brennkammer. Innerhalb kürzester Zeit kann auf dies Weise eine Vielzahl von Hitzeschilden auf ihre Funktionsfähigkeit hin überprüft werden. Das Erfassen der Degradation ist dabei nicht von einer Dicke der Hitzeschilde begrenzt.

Zum Überprüfen der Funktionsfähigkeit des Bauteils ist der Schwingkreis an einer kritischen Stelle des Bauteils angebracht. Ein Auftreten der Degradation des Bauteils an der kritischen Stelle führt dazu, dass die Funktionsfähigkeit des Bauteils nur eingeschränkt oder gar nicht mehr gewährleistet wäre. Das Bauteil ist beispielsweise ein eingangs beschriebenes Hitzeschild. Die Funktionsfähigkeit des Hitzeschilds ist nur dann gewährleistet, wenn ein sich vom Rand des Hitzeschildes in Richtung Mitte des Hitzeschildes ausbreitender Riss eine bestimmte kritische Länge nicht überschreitet. Die kritische Stelle des Hitzeschildes wäre in diesem Beispiel durch einen bestimmten Abstand vom Rand des Hitzeschildes in Richtung Mitte des Hitzeschildes festgelegt. Der Schwingkreis ist an der Oberfläche des Hitzeschildes in diesem bestimmten, kritischen Abstand beispielsweise ringförmig um die Mitte des Hitzeschildes angebracht.

Unter Degradation ist eine bleibende, die Funktion des Bauteils beeinträchtigende Schädigung zu verstehen. Die Degradation des Bauteils und/oder die Degradation des Schwingkreises kann aus der Gruppe Verformung und/oder Materialabtrag und/oder Rissbildung und/oder Rissausbreitung ausgewählt sein. Beispielsweise tritt bei dem Bauteil als Verformung eine Verbiegung auf. Wenn die mit dem Bauteil verbundene, den Schwingkreis bildende Leiterstruktur aus einem spröden elektrischen Leitermaterial besteht, kann die Verbiegung des Bauteils zu einem Riss oder einem Bruch der Leiterstruktur führen. Der Schwingkreis wird zerstört.

Die beschriebene Anordnung aus Hitzeschild und Kontrollvorrichtung kann vorteilhaft auch dazu benutzt werden, um eine Anwesenheit des Hitzeschildes in der Brennkammer zu überprüfen. Ist ein Messsignal erfassbar, so ist das Hitzeschild vorhanden. Die Funktionsfähigkeit des Hitzeschildes ist gewährleistet. Ist dagegen kein Messsignal detektierbar, so ist entweder die Degradation des Hitzeschildes so weit fortgeschritten, dass die Kontrollvorrichtung zerstört ist, oder das Hitzeschild mit der Kontrollvorrichtung ist nicht mehr vorhanden. In beiden Fällen ist die Funktionsfähigkeit des Hitzeschildes nicht mehr gewährleistet. Durch ein ständiges Überprüfen während einer Betriebsphase des Hitzeschildes bzw. der Brennkammer mit dem Hitzeschild können die Degradation und das Fehlen eines Hitzeschildes sehr schnell erkannt und entsprechende Maßnahmen eingeleitet werden. Ein mit der Degradation oder dem Fehlen des Hitzeschildes verbundener Folgeschaden kann dadurch erheblich eingeschränkt werden.

Die Leiterstruktur weist zumindest ein aus der Gruppe keramische Leiter und/oder metallische Leiter ausgewähltes elektrisch leitfähiges Leitermaterial auf. Denkbar ist beispielsweise, dass die Leiterstruktur aus einem sogenannten Cermet aufgebaut ist. In dem Cermet sind Partikel eines metallischen Leiters in einer Keramik derart verteilt, dass eine bestimmte elektrische Leitfähigkeit resultiert. Alternativ dazu kann die Leiterstruktur aus einem elektrisch leitfähigen, keramischen Material bestehen. In beiden Fällen liegt ein sprödes Leitermaterial vor. Ein Riss im Bauteil kann sich als Riss in der Leiterstruktur fortsetzen.

Das Bauteilmaterial des Bauteils und das Leitermaterial der Leiterstruktur können aus völlig verschiedenen Materialien bzw. Materialklassen mit unterschiedlichen mechanischen Eigenschaften bestehen. Beispielsweise besteht das Bauteil aus einem Metall. Aufgrund einer Duktilität des Metalls kann es zu einer Degradation des Bauteils in Form einer Verbiegung kommen. Damit die Verbiegung mit Hilfe der Leiterstruktur bestimmt werden kann, wird beispielsweise die Leiterstruktur elektrisch isolierend auf den Oberflächenabschnitt des Bauteils aufgebracht. Als elektrischer Isolator fungiert beispielsweise eine Keramik. Wenn nun die Leiterstruktur aus einem spröden Leitermaterial gebildet ist, führt die Verbiegung des Bauteils zu einem Riss in der Leiterstruktur. Der von der Leiterstruktur gebildete Schwingkreis wird zerstört. Die Verbiegung des Bauteils ist nachweisbar.

In einer besonderen Ausgestaltung weisen ein Bauteilmaterial des Bauteils und das Leitermaterial der Leiterstruktur eine im Wesentlichen gleiche mechanische Eigenschaft auf. Diese mechanische Eigenschaft ist insbesondere aus der Gruppe Temperaturausdehnungs-Verhalten und Bruchzähigkeit ausgewählt. Bei einem Bauteil in Form eines Hitzeschildes tritt zwischen einer Betriebsphase und einer Standphase der Gasturbine ein sehr großer Temperaturunterschied auf. Im Betrieb wird beispielsweise im Innenraum der Brennkammer eine Temperatur von bis zu 1500 °C erreicht. Durch das im Wesentlichen gleiche Temperaturausdehnungs-Verhalten ist gewährleistet, dass der Kontakt zwischen der Leiterstruktur und dem Bauteil auch während eines Wechsels zwischen Betriebsphase und Standphase bestehen bleibt. Besonders vorteilhaft ist es, wenn die Bruchzähigkeit des Bauteilmaterials und die Bruchzähigkeit des Leitermaterials im Wesentlichen gleich sind. Dadurch wird erreicht, dass sich ein Bruch oder ein Riss im Bauteil in die Leiterstruktur fortsetzen kann.

Neben den im Wesentlichen gleichen mechanischen Eigenschaften ist es vorteilhaft, wenn sich das Bauteilmaterial und das Leitermaterial durch eine zumindest ähnliche Stabilität gegenüber einem äußeren Einfluss auszeichnen. Der äußere Einfluss ist beispielsweise eine Atmosphäre oder eine Temperatur, der das Bauteil und/oder die Leiterstruktur während des Betriebs ausgesetzt sind. Beispielsweise tritt auf dem Oberflächenabschnitt des Hitzeschildes, der dem Innenraum abgekehrt ist, im Betrieb der Brennkammer eine Oberflächentemperatur von bis zu 800°C auf. Wenn die Leiterstruktur auf diesem Oberflächenabschnitt aufgebracht ist, sollte das Leitermaterial der Leiterstruktur bis zu 800°C temperaturbeständig sein.

Vorzugsweise sind der Schwingkreis und/oder der weitere Schwingkreis und/oder die Antenne von einer auf einem Oberflächenabschnitt des Bauteils angeordneten und/oder in einem Volumen des Bauteils integrierten elektrischen Leiterstruktur gebildet. Zum Herstellen der Anordnung wird gemäß einer besonderen Ausgestaltung als Bauteilmaterial des Bauteils eine Keramik und als Leitermaterial ein metallischer Leiter oder ein keramischer Leiter verwendet. Dabei wird zum festen Verbinden ein gemeinsames Sintern der Keramik und des Leitermaterials und/oder der Vorstufe des Leitermaterials durchgeführt. Beispielsweise wird auf dem Oberflächenabschnitt eines bereits fertigen keramischen Bauteils eine Paste eines keramischen Leitermaterials aufgebracht. Die Paste kann als Vorstufe des keramischen Leitermaterials ausgebildet sein. Der Oberflächenabschnitt kann dabei von einer im Bauteil befindlichen Nut mit der Form der herzustellenden Leiterstruktur gebildet sein. Zum Aufbringen der Paste eignet sich beispielsweise ein Siebdruckverfahren oder ein Maskenverfahren. Das Leitermaterial wird dabei je nach Anforderung als Schleife, Spirale oder Mäander aufgetragen. Maßgebend sind hier die Art, Form und Toleranzgrenze der zu erfassenden Degradation. Durch gemeinsames Sintern bei einer Sintertemperatur der Paste bildet sich aus der Paste die Leiterstruktur mit dem keramische Leitermaterial. Denkbar ist auch, dass das Bauteil in Form eines keramischen Grünkörpers vorliegt und die Paste des keramischen Leitermaterials auf einem Oberflächenabschnitt des keramischen Grünkörpers aufgetragen wird. Durch ein gemeinsames Sintern, bei dem sowohl ein Verdichten des keramischen Bauteilmaterials des Bauteils als auch ein Verdichten des keramischen Leitermaterials der Leiterstruktur stattfindet, wird die Anordnung hergestellt.

Eine Integration der Leiterstruktur im Volumen des Bauteils gelingt beispielsweise dann, wenn das Bauteil aus mehreren keramischen Schichten besteht. Das Bauteil ist ein keramischer Mehrschichtkörper. Die Schichten werden zusammen mit der Leiterstruktur beispielsweise durch gemeinsames Sintern zusammengefügt. Es resultiert ein keramischer Mehrschichtkörper, in dessen Volumen die Leiterstruktur integriert ist.

Die Leiterstruktur kann aber auch in einem keramischen Mehrschichtkörper integriert sein, der nicht das zu kontrollierende Bauteil ist. Der keramische Mehrschichtkörper ist Bestandteil der Kontrollvorrichtung. Der Mehrschichtkörper kann sich durch kleine Abmessungen bei einer hohen Integrationsdichte auszeichnen. So ist es möglich, die gesamte Leiterstruktur der Kontrollvorrichtung in dem keramischen Mehrschichtkörper zu integrieren. Ebenso können mehrere der beschriebenen Kontrollvorrichtungen in einem Mehrschichtkörper integriert sein. In einer besonderen Ausgestaltung ist daher die Leiterstruktur zumindest teilweise in einem keramischen Mehrschichtkörper integriert. Beispielsweise ist in der Mitte eines Hitzeschildes ein keramisches Mehrschichtkörper aufgebracht, der als Modul ausgestaltet den weiteren Schwingkreis und die Antenne der Kontrollvorrichtung enthält. Das keramische Mehrschichtkörper ist beispielsweise ein HTCC (High Temperature Cofired Ceramics)- oder ein LTCC (Low Temperature Cofired Ceramics)-Substrat. Das Aufbringen des Moduls gelingt beispielsweise durch ein Sintern eines bereits vorgefertigten keramischen Mehrschichtsubstrats und des Hitzeschildes.

Als Bauteil ist jedes beliebige Bauteil vorstellbar. Insbesondere ist das Bauteil ein Hitzeschild einer Brennkammer. Hier treten sehr starke Temperaturschwankungen auf, die zur Bildung von Makrorissen führen können. Wie eingangs beschrieben, können derartige Makrorisse bei Überschreiten einer kritischen Länge nicht toleriert werden. Zur Kontrolle der Funktionsfähigkeit des Hitzeschildes sind der Schwingkreis und/oder der weitere Schwingkreis und/oder der Gesamtschwingkreis vorzugsweise an einem gemeinsamen Oberflächenabschnitt des Hitzeschildes angeordnet, der einem Innenraum der Brennkammer abgekehrt ist.

Zusammenfassend ergeben sich mit der Erfindung folgende besonderen Vorteile:

- Es ist ein einfaches, berührungsloses und zuverlässiges Erfassen einer Degradation eines Bauteils möglich.

- Das Bauteil selbst kann eine extrem inhomogene Struktur aufweisen. Ebenso kann das Bauteil eine relativ große Bauteildicke aufweisen. Der Nachweis der Degradation ist auch unter diesen Bedingungen einfach und zuverlässig möglich.

- Die Degradation kann auch an einem Oberflächenabschnitt des Bauteils bestimmt werden, der nur schwer zugänglich sind.

- Die Funktionsfähigkeit des Bauteils kann sowohl in einer Standphase als auch in einer Betriebsphase erfolgen.

Anhand mehrerer Ausführungsbeispiele und der dazugehörigen Figuren wird die Erfindung im Folgenden näher beschrieben. Die Figuren sind schematisch und stellen keine maßstabsgetreuen Abbildungen dar.

Figur 1    zeigt eine Anordnung aus Bauteil und Kontrollvorrichtung in perspektivischer Darstellung.

Figur 2    zeigt ein weiteres Ausführungsbeispiel einer Anordnung aus Bauteil und Kontrollvorrichtung in perspektivischer Darstellung.

Figur 3    zeigt eine Degradation eines Bauteils, die sich als Degradation des Schwingkreises fortsetzt.

Figur 4    zeigt ein Ersatzschaltbild eines Gesamtschwingkreises der Kontrollvorrichtungen aus den Figuren 1 und 2.

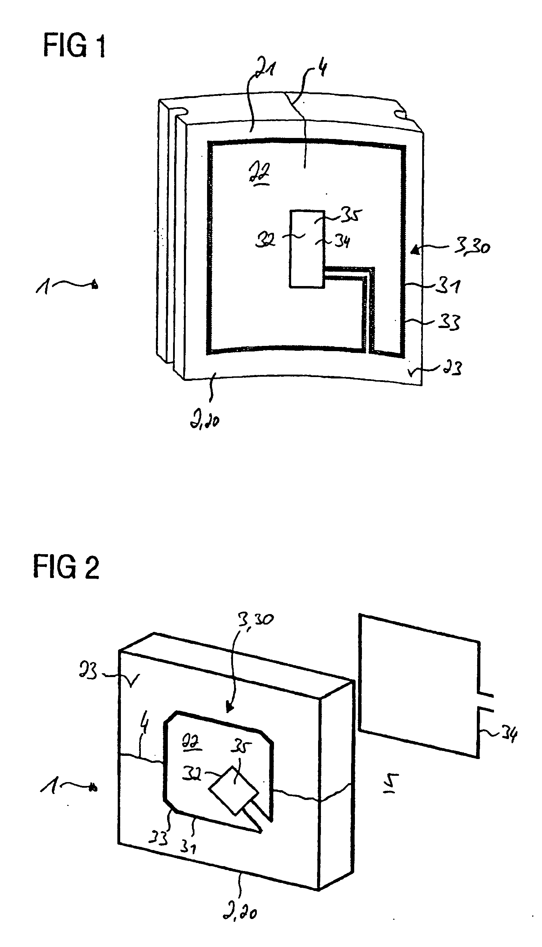

Die Anordnung 1 besteht aus einem Bauteil 2 in Form eines Hitzeschildes 20 und einer Kontrollvorrichtung 3 zum Erfassen einer Degradation 4 des Bauteils 2 (Figuren 1 und 2). Die Kontrollvorrichtung 3 weist eine auf dem Oberflächenabschnitt 23 des Hitzeschildes 20 aufgebrachte elektrische Leiterstruktur 33 auf. Der Oberflächenabschnitt 23 ist dem Innenraum 5 einer Brennkammer einer Gasturbine abgekehrt. Die Leiterstruktur 33 befindet sich an der Außenseite des Hitzeschildes 20.

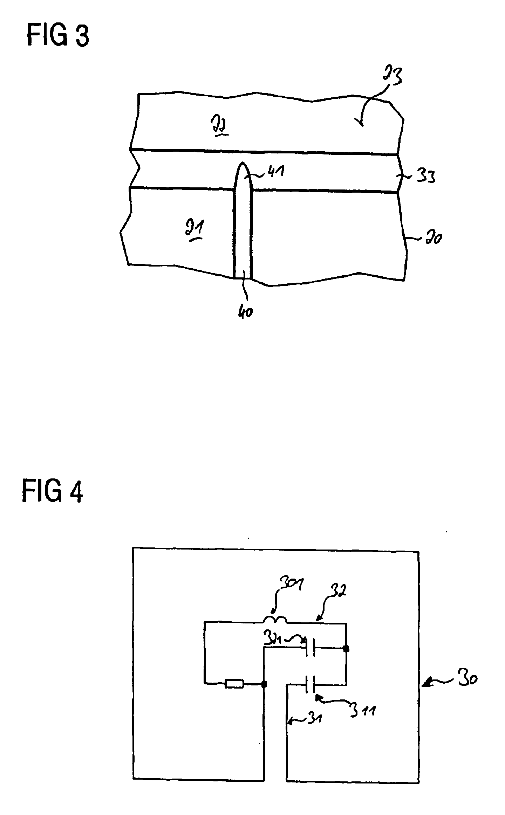

Die Kontrollvorrichtung 3 weist einen Schwingkreis 31 und einen Schwingkreis 32 auf. Der Schwingkreis 31 und der weitere Schwingkreis 32 sind zu einem Gesamtschwingkreis 30 gekoppelt. Dazu sind der Kondensator 311 des Schwingkreises 31 und ein weiterer Kondensator 321 des weiteren Schwingkreises 32 parallel geschaltet (Figur 4). Es resultiert ein Gesamtschwingkreis 30 mit einem detektierbaren Gesamtresonanzsignal, dessen Gesamtresonanzfrequenz $f_0$ von den Kapazitäten beider Kondensatoren 311 und 321 wie folgt abhängt:

$$f_0 = \frac{1}{2\pi\sqrt{LC}} = \frac{1}{2\pi\sqrt{L(C_1 + C_2)}} \qquad (1)$$

Für den Fall, dass der Schwingkreis 31 unterbrochen ist, ist nur das weitere Resonanzsignal des weiteren Schwingkreises 32 erfassbar, für dessen weitere Resonanzfrequenz $f_2$ folgender Zusammenhang gilt:

$$f_2 = \frac{1}{2\pi\sqrt{LC}} = \frac{1}{2\pi\sqrt{LC_2}} \qquad (2)$$

Beträgt die Kapazität $C_1$ des Kondensators 311 etwa 47 pF, die Kapazität $C_2$ des weiteren Kondensators 321 etwa 10 pF und die gemeinsame Induktivität L, die beispielsweise von einer Spule 301 gebildet wird, etwa 3 $\mu$H, ergibt sich gemäß Gleichung (1) für die Gesamtresonanzfrequenz $f_0$ ein Wert von 12 MHz und gemäß Gleichung (2) für die weitere Resonanzfrequenz $f_2$ ein Wert von 29 MHz.

Neben den Schwingkreisen 31 und 32 verfügt die Kontrollvorrichtung 3 über eine Antenne 34. Die Antenne 34 dient als Einrichtung zum Einspeisen eines Anregungssignals in den Schwingkreis 31, in den weiteren Schwingkreis 32 und schließlich in den Gesamtschwingkreis 30. Die Antenne 34 dient auch als Detektor zum Erfassen des Resonanzsignals und/oder des weiteren Resonanzsignals und/oder des Gesamtresonanzsignals. Mit Hilfe der Antenne 34 wird Energie in Form eines Hochfrequenzsignals in die Schwingkreise 30, 31 und 32 eingekoppelt. Wenn die Schwingkreise 31 und 32 intakt sind, das heißt nicht degradiert sind, so wird ein Gesamtresonanzsignal erhalten, das bezüglich seiner Resonanzfrequenz und seiner Amplitude einem vorgegebenen Sollwert entspricht. Wird dagegen ein Messsignal erhalten, das nicht dem vorgegebenen Gesamtresonanzsignal entspricht, so kann auf eine Degradation des Schwingkreises 31 oder auch des weiteren Schwingkreises 32 geschlossen werden.

Das Hitzeschild 20 weist als Bauteilmaterial eine Keramik auf. Die Keramik ist Mullit. Das Leitermaterial der Leiterstruktur 33 ist ein bis zu einer Temperatur von 800° C beständiger, elektrisch leitfähiger keramischer Leiter. Das Leitermaterial und das Bauteilmaterial sind spröde. Sie zeigen eine im Wesentlichen gleiche Bruchzähigkeit auf.

Die Leiterstruktur 33 ist auf dem Oberflächenabschnitt 23 des Hitzeschildes 20 derart aufgebracht, dass sich jeder Riss 40 im Hitzeschild 20, der sich vom Rand 21 des Hitzeschildes 20 in Richtung Mitte 22 des Hitzeschildes 20 ausbreitet und eine bestimmte Länge überschreitet, in der Leiterstruktur 33 fortsetzt. Sobald die Länge des Risses 40 eine kritische Länge überschreitet, führt die weitere Ausbreitung des Risses 40 zu einer Degradation 41 (Rissbildung bzw. Rissausbreitung) in der Leiterstruktur 33. Es kommt zu einer Degradation des Schwingkreises 31.

Gemäß einem ersten Ausführungsbeispiel ist der weitere Schwingkreis 32 des Gesamtschwingkreises 30 in einem keramischen Mehrschichtkörper 35 integriert. Der keramische Mehrschichtkörper 35 ist ein LTCC-Substrat. Eine Leiterstruktur aus Silber bildet den weiteren Schwingkreis 32.

Die Antenne 34 der Kontrollvorrichtung 3 ist in einer ersten Ausführung zusammen mit dem weiteren Schwingkreis 32 in dem keramischen Mehrschichtkörper 35 integriert (Figur 1). Gemäß einer weiteren Ausführung ist die Antenne 34 nicht im Mehrschichtkörper 35 integriert. Der Mehrschichtkörper 35 enthält nur den weiteren Schwingkreis 32 der Kontrollvorrichtung 3 (Figur 2).

Zum Erfassen der Degradation des Schwingkreises 31 wird in einer Standphase die Antenne 34 im Innenraum 5 der Brennkammer an das Hitzeschild 20 gehalten. Durch die Antenne 34 wird ein Hochfrequenzsignal in die Schwingkreise 30, 31 oder 32 eingekoppelt. Je nach Zustand des Schwingkreises 31, des weiteren Schwingkreises 32 und des Gesamtschwingkreises 30 kommt es zur Absorption des Hochfrequenzsignals und zum Aussenden eines entsprechenden Messsignales. Anhand der Zuordnung des Messsignals zu einem der Resonanzsignalen wird auf die Degradation des Bauteils rückgeschlossen.

**Patentansprüche**

1. Anordnung (1) eines Bauteils (2, 20) und mindestens einer Kontrollvorrichtung (3) zum Erfassen einer Degradation (4, 40) des Bauteils (2, 20), wobei

   - die Kontrollvorrichtung (3) mindestens einen elektrischen Schwingkreis (31) aufweist und
   - der Schwingkreis (31) von einer auf einem Oberflächenabschnitt (32) des Bauteils (2, 20) angeordneten und/oder in einem Volumen des Bauteils (2, 20) integrierten elektrischen Leiterstruktur (33) gebildet ist, so dass die Degradation (4, 40) des Bauteils (2, 20) eine Degradation (41) des Schwingkreises (31) und damit eine Änderung eines detektierbaren Resonanzsignals des Schwingkreises (31) bewirkt,

**dadurch gekennzeichnet, dass**

- die Kontrollvorrichtung (3) mindestens einen weiteren Schwingkreis (32) mit einem weiteren detektierbaren Resonanzsignal aufweist und

- der Schwingkreis (31) und der weitere Schwingkreis (32) elektrisch zu einem Gesamtschwingkreis (30) mit einem detektierbaren, vom Resonanzsignal und vom weiteren Resonanzsignal verschiedenen Gesamtresonanzsignal gekoppelt sind

- wobei die Kontrollvorrichtung (3) mindestens eine Einrichtung (34) zum Einspeisen eines Anregungssignals in den Schwingkreis (31) und/oder in den weiteren Schwingkreis (32) und/oder in den Gesamtschwingkreis (30) aufweist und

- wobei die Kontrollvorrichtung (3) mindestens einen Detektor (34) zum Erfassen des Resonanzsignals und/ oder des weiteren Resonanzsignals und/oder des Gesamtresonanzsignals aufweist,

- wobei der Schwingkreis (31) und der weitere Schwingkreis (32) durch eine parallele Verschaltung zum Gesamtschwingkreis (30) gekoppelt sind.

2. Anordnung nach Anspruch 1, wobei der Detektor zum Erfassen eines der Resonanzsignale und/oder die Einrichtung zum Einspeisen eines der Anregungssignale mindestens eine Antenne (34) aufweisen.

3. Anordnung nach einem der Ansprüche 1 oder 2, wobei der weitere Schwingkreis (32) und/oder die Antenne (34) von einer auf dem Oberflächenabschnitt (32) des Bauteils (2, 20) angeordneten und/oder in einem Volumen des Bauteils (2, 20) integrierten elektrischen Leiterstruktur (33) gebildet sind.

4. Anordnung nach Anspruch 3, wobei die Leiterstruktur (33) zumindest teilweise in einem keramischen Mehrschichtkörper (35) integriert ist.

5. Anordnung nach Anspruch 3 oder 4, wobei die Leiterstruktur (33) zumindest ein aus der Gruppe keramischer Leiter und/oder metallischer Leiter ausgewähltes elektrisch leitfähiges Leitermaterial aufweist.

6. Anordnung nach Anspruch 5, wobei ein Bauteilmaterial des Bauteils (2, 20) und das Leitermaterial der Leiterstruktur (33) eine im Wesentlichen gleiche mechanische Eigenschaft aufweisen.

7. Anordnung nach einem der Ansprüche 1 bis 6, wobei das Bauteil (2) ein Hitzeschild (20) einer Brennkammer ist.

8. Anordnung nach Anspruch 7, wobei der Schwingkreis (31) und/oder der weitere Schwingkreis (32) und/oder die Antenne (34) an einem gemeinsamen Oberflächenabschnitt (23) des Hitzeschildes (20) angeordnet sind, der einem Innenraum (5) der Brennkammer abgekehrt ist.

9. Verfahren zum Herstellen einer Anordnung nach einem der Ansprüche 1 bis 8 mit folgenden Verfahrensschritten:

a) Aneinander Anordnen des Bauteils und eines Leitermaterials und/oder einer Vorstufe des Leitermaterials und
b) festes Verbinden des Bauteils und des Leitermaterials und/oder der Vorstufe des Leitermaterials derart, dass eine den Gesamtschwingkreis bildende Leiterstruktur auf dem Bauteil entsteht.

10. Verfahren nach Anspruch 9, wobei als Bauteilmaterial des Bauteils eine Keramik und als Leitermaterial ein metallischer Leiter und/oder ein keramischer Leiter verwendet werden und zum festen Verbinden ein gemeinsames Sintern der Keramik und des Leitermaterials und/oder der Vorstufe des Leitermaterials durchgeführt wird.

11. Verfahren zum Überprüfen einer Funktionsfähigkeit eines Bauteils unter Verwendung einer Anordnung nach einem der Ansprüche 1 bis 8 mit folgenden Verfahrensschritten:

a') Detektieren eines Messsignals der Kontrollvorrichtung und
b') Zuordnen des Messsignals zum Resonanzsignal des Schwingkreises und/oder zum weiteren Resonanzsignals des weiteren Schwingkreises und/oder zum Gesamtresonanzsignals des Gesamtschwingkreises, wobei auf die Funktionsfähigkeit des Bauteils geschlossen wird.

**EP 1 759 191 B1**

**Claims**

1. Configuration (1) of a component (2, 20) and at least one test device (3) for detecting a degradation (4, 40) of the component (2, 20), with

- the test device (3) having at least one electrical oscillating circuit (31) and
- the oscillating circuit (31) being formed by an integrated electrical conductor structure (33) arranged on a surface section (32) of the component (2, 20) and/or in a volume of the component (2, 20), so that the degradation (4, 40) of the component (2, 20) causes a degradation (41) of the oscillating circuit (31) and thus a modification of a detectable resonant signal of the oscillating circuit (31), **characterised in that**
- the test device (3) has at least one further oscillating circuit (32) with a further detectable resonant signal and
- the oscillating circuit (31) and the further oscillating circuit (32) are coupled electrically to a comprehensive oscillating circuit (30) with a detectable comprehensive resonant signal differing from the resonant signal and from the further resonant signal
- with the test device (3) having at least one device (34) for injecting an excitation signal into the oscillating circuit (31) and/or into the further oscillating circuit (32) and/or into the comprehensive oscillating circuit (30) and
- with the test device (3) having at least one detector (34) for detecting the resonant signal and/or the further resonant signal and/or the comprehensive resonant signal,
- with the oscillating circuit (31) and the further oscillating circuit (32) being coupled by a parallel connection to form the comprehensive oscillating circuit (30).

2. Configuration according to claim 1, with the detector for detecting one of the resonant signals and/or the device for injection of one of the excitation signals having at least one antenna (34).

3. Configuration according to one of claims 1 or 2, with the further oscillating circuit (32) and/or the antenna (34) being formed by an integrated conductor structure (33) arranged on the surface section (32) of the component (2, 20) and/or in a volume of the component (2, 20).

4. Configuration according to claim 3, with the conductor structure (33) being integrated at least partly into a ceramic multilayer body (35).

5. Configuration according to claim 3 or 4, with the conductor structure (33) having at least one electrically conductive conductor material selected from the group ceramic conductors and/or metallic conductors.

6. Configuration according to claim 5, with a component material of the component (2, 20) and the conductor material of the conductor structure (33) exhibiting an essentially identical mechanical property.

7. Configuration according to one of claims 1 to 6, with the component (2) being a heat shield (20) of a combustion chamber.

8. Configuration according to claim 7, with the oscillating circuit (31) and/or the further oscillating circuit (32) and/or the antenna (34) being arranged on a common surface section (23) of the heat shield (20), which is turned away from an interior (5) of the combustion chamber.

9. Method for manufacturing a configuration according to one of claims 1 to 8 with the following method steps:

a) arranging the component and a conductor material and/or a preliminary stage of the conductor material next to one another and
b) firm connection of the component and the conductor material and/or a preliminary stage of the conductor material such that a conductor structure forming a comprehensive oscillating circuit is produced on the component.

10. Configuration according to claim 9, with a ceramic being used as component material of the component and a metallic conductor and/or a ceramic conductor as conductor material and for firm connection a common sintering of the ceramic and of the conductor material and/or the preliminary stage of the conductor material being carried out.

11. Method for checking operability of a component using an arrangement according to one of claims 1 to 8, with the following method steps:

8

a') detecting a measurement signal of the test device and

b') assigning the measurement signal to the resonant signal of the oscillating circuit and/or to further resonant signals of the further oscillating circuit and/or the comprehensive resonant signals of the comprehensive oscillating circuit, with a conclusion being drawn about the operability of the component.

**Revendications**

1.  Configuration (1) d'un élément (2, 20) et d'au moins un dispositif de contrôle (3) destiné à détecter une dégradation (4, 40) de l'élément (2, 20), dans laquelle

    - le dispositif de contrôle (3) comporte au moins un circuit électrique oscillant (31) et
    - le circuit oscillant (31) est formé par une structure électrique conductrice (33), disposée sur une portion de surface (32) de l'élément (2, 20) et/ou intégrée dans un volume de l'élément (2, 20), de telle sorte que la dégradation (4, 40) de l'élément (2, 20) provoque une dégradation (41) du circuit oscillant (31) et donc un changement d'un signal de résonance détectable du circuit oscillant (31),
    **caractérisée en ce que**
    - le dispositif de contrôle (3) comporte au moins un circuit oscillant supplémentaire (32) avec un signal de résonance détectable supplémentaire et
    - le circuit oscillant (31) et le circuit oscillant supplémentaire (32) sont couplés électriquement pour former un circuit oscillant global (30) avec un signal de résonance global détectable, différent du signal de résonance et du signal de résonance supplémentaire,
    - le dispositif de contrôle (3) comportant au moins un moyen (34) destiné à injecter un signal d'excitation dans le circuit oscillant (31) et/ou dans le circuit oscillant supplémentaire (32) et/ou dans le circuit oscillant global (30) et
    - le dispositif de contrôle (3) comportant au moins un détecteur (34) destiné à détecter le signal de résonance et/ou le signal de résonance supplémentaire et/ou le signal de résonance global,
    - le circuit oscillant (31) et le circuit oscillant supplémentaire (32) étant couplés par un câblage parallèle pour former le circuit oscillant global (30).

2.  Configuration selon la revendication 1, dans laquelle le détecteur destiné à détecter l'un des signaux de résonance et/ou le moyen destiné à injecter l'un des signaux d'excitation comportent au moins une antenne (34).

3.  Configuration selon l'une des revendications 1 ou 2, dans laquelle le circuit oscillant supplémentaire (32) et/ou l'antenne (34) sont formés par une structure électrique conductrice (33), disposée sur une portion de surface (32) de l'élément (2, 20) et/ou intégrée dans un volume de l'élément (2, 20).

4.  Configuration selon la revendication 3, dans laquelle la structure conductrice (33) est au moins partiellement intégrée dans un corps céramique multicouche (35).

5.  Configuration selon la revendication 3 ou 4, dans laquelle la structure conductrice (33) comprend au moins un matériau électroconducteur choisi dans le groupe des conducteurs céramiques et/ou des conducteurs métalliques.

6.  Configuration selon la revendication 5, dans laquelle un matériau de l'élément (2, 20) et le matériau conducteur de la structure conductrice (33) présentent une caractéristique mécanique essentiellement identique.

7.  Configuration selon l'une des revendications 1 à 6, dans laquelle l'élément (2) est un bouclier thermique (20) d'une chambre de combustion.

8.  Configuration selon la revendication 7, dans laquelle le circuit oscillant (31) et/ou le circuit oscillant supplémentaire (32) et/ou l'antenne (34) sont disposés sur une portion de surface commune (23) du bouclier thermique (20), qui est opposée à un espace intérieur (5) de la chambre de combustion.

9.  Procédé pour réaliser une configuration selon l'une des revendications 1 à 8, comportant les étapes de procédé suivantes :

    a) disposer l'un contre l'autre l'élément et un matériau conducteur et/ou un précurseur du matériau conducteur et
    b) assembler solidement l'élément et le matériau conducteur et/ou le précurseur du matériau conducteur de façon à obtenir sur l'élément une structure conductrice formant le circuit oscillant global.

**10.** Procédé selon la revendication 9, dans lequel on utilise comme matériau de l'élément une céramique et comme matériau conducteur un conducteur métallique et/ou un conducteur céramique, et pour assurer l'assemblage solide on procède à un cofrittage de la céramique et du matériau conducteur et/ou du précurseur du matériau conducteur.

**11.** Procédé de contrôle de la capacité de fonctionnement d'un élément par l'utilisation d'une configuration selon l'une des revendications 1 à 8, comportant les étapes de procédé suivantes :

a') détecter un signal de mesure du dispositif de contrôle et

b') associer le signal de mesure au signal de résonance du circuit oscillant et/ou au signal de résonance supplémentaire du circuit oscillant supplémentaire et/ou au signal de résonance global du circuit oscillant global, et conclure à la capacité de fonctionnement de l'élément.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10223985 A1